# EUROPEAN PATENT SPECIFICATION

(11) **EP 4 597 995 B1**
(45) Date of publication and mention of the grant of the patent: **11.11.2026**
(21) Application number: 23917872.6
(22) Date of filing: 15.11.2023
(51) Int. Cl.: H04M 1/02, H01Q 1/22, H01Q 1/24, H04B 5/26, H04B 5/43

(54) **ELECTRONIC DEVICE COMPRISING MAGNETIC FORCE COMPONENT**
ELEKTRONISCHE VORRICHTUNG MIT EINER MAGNETISCHEN KRAFTKOMPONENTE
DISPOSITIF ÉLECTRONIQUE COMPRENANT UNE COMPOSANTE DE FORCE MAGNÉTIQUE

(30) Priority: 19.01.2023 KR 20230008200; 09.02.2023 KR 20230017533
(43) Date of publication of application: 06.08.2025
(73) Proprietor: Samsung Electronics Co., Ltd., Suwon-si, Gyeonggi-do 16677 (KR)
(72) Inventor: HONG, Seokung, Suwon-si, Gyeonggi-do 16677 (KR); LEE, Hanyeop, Suwon-si, Gyeonggi-do 16677 (KR); CHOI, Taihwan, Suwon-si, Gyeonggi-do 16677 (KR); YU, Garam, Suwon-si, Gyeonggi-do 16677 (KR); LIM, Gun, Suwon-si, Gyeonggi-do 16677 (KR); CHOI, Jinwook, Suwon-si, Gyeonggi-do 16677 (KR)
(74) Representative: Gulde & Partner
(86) International application number: PCT/KR2023/018353
(87) International publication number: WO 2024/154919

(56) References cited:
- KR-A- 20160 029 442
- KR-A- 20210 028 001
- KR-A- 20210 133 817
- KR-B1- 101 633 856
- KR-B1- 102 232 992
- US-A1- 2018 301 790
- US-A1- 2021 066 807
- US-A1- 2021 184 354

## Description

### [Technical Field]

An embodiment(s) of the disclosure relates to an electronic device, e.g., a magnetic force component and/or an electronic device including the same.

### [Background Art]

The growth of electronics, information, and communication technologies leads to integration of various functions into a single electronic device. For example, smartphones pack the functionalities of a sound player, imaging device, and scheduler, as well as the communication functionality and, on top of that, may implement more various functions by having applications installed thereon. An electronic device may not only its equipped applications or stored files but also access, wiredly or wirelessly, a server or another electronic device to receive, in real-time, various pieces of information.

As various features are implemented in a single electronic device (e.g., a smartphone), smartphones have taken the place of electronic devices performing designated functions, such as music players, and are gradually invading the realm of video players or recording devices. As such, as electronic devices are routinely carried and used, and have more functions, user demands for portability, usability, and/or performance may increase.

US2021066807A1 discloses an electronic device, comprising: a housing comprising a front plate and a rear plate disposed opposite the front plate; a display disposed in a space between the front plate and the rear plate and viewable through at least a portion of the front plate; an antenna structure comprising at least one coil, the antenna structure having a first surface facing the rear plate in the space and a second surface facing a direction opposite the first surface.

The above-described information may be provided as background for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an electronic device may comprise a housing including a front surface and a rear surface facing in a direction opposite to the front surface, a magnetic force component disposed between the front surface and the rear surface, a supporting member at least partially disposed between the magnetic force component and the rear surface, and an antenna pattern at least partially disposed on one surface of the supporting member facing the rear surface, and disposed along a trajectory of a loop shape wound at least twice as viewed from the rear surface. In an embodiment, a first gap between two adjacent portions of the antenna pattern in an area (hereinafter, a 'first area (A1)') between the magnetic force component and the rear surface may be larger than a second gap between two adjacent portions of the antenna pattern in a second area different from the first area.

According to an embodiment of the disclosure, an electronic device may comprise a housing including a front surface and a rear surface facing in a direction opposite to the front surface, a magnetic force component disposed between the front surface and the rear surface, a supporting member at least partially disposed between the magnetic force component and the rear surface, and an antenna pattern disposed on the supporting member, and disposed along a trajectory of a loop shape wound at least twice as viewed from the rear surface. In an embodiment, the antenna pattern may include a first portion at least partially disposed on a surface, facing the front surface, of two opposite surfaces of the supporting member in an area (hereinafter, a 'first area') between the magnetic force component and the rear surface, and a second portion disposed on a surface, facing the rear surface, of the two opposite surfaces of the supporting member in a second area different from the first area.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a front perspective view illustrating an electronic device according to an embodiment of the disclosure;
FIG. 3 is a perspective view illustrating a rear surface of the electronic device of FIG. 2 according to an embodiment of the disclosure;
FIG. 4 is an exploded front perspective view illustrating the electronic device of FIG. 2, according to an embodiment of the disclosure;
FIG. 5 is a rear exploded perspective view illustrating the electronic device of FIG. 2 according to an embodiment of the disclosure;
FIG. 6 is a view illustrating a second supporting member of an electronic device as viewed in a +Z direction according to an embodiment of the disclosure;
FIG. 7 is a view illustrating a second supporting member of an electronic device as viewed in a -Z direction according to an embodiment of the disclosure;
FIG. 8 is an enlarged view illustrating a portion 'E' of FIG. 6 according to an embodiment of the disclosure;
FIG. 9 is a view illustrating an antenna pattern of an electronic device according to an embodiment of the disclosure;
FIG. 10 is a view illustrating a structure in which an antenna pattern of an electronic device is disposed according to an embodiment of the disclosure;
FIG. 11 is a view illustrating a second supporting member taken along line C of FIG. 9 according to an embodiment of the disclosure;
FIG. 12 is a view illustrating an antenna pattern of an electronic device according to an embodiment of the disclosure; and
FIG. 13 is a view illustrating an antenna pattern of an electronic device according to an embodiment of the disclosure.

Throughout the accompanying drawings, it may be understood that similar reference numbers denote similar components, components, and/or structures.

### [Mode for Carrying out the Invention]

User needs for portability, usability, and/or performance may generally relate to downsizing and/or lightening of electronic devices, processing speed of communication or data, and advancement of image quality or sound quality. The degree of integration of electronic devices may be increased in meeting such user requirements. As the degree of integration of electronic devices increases, the operating environment of various electronic components may deteriorate. For example, as various components are disposed in a reduced space, magnetic force components such as motors that provide haptic feedback, speaker modules with built-in voice coils, and microphone modules may generate magnetic fields, hindering the operating environment of other components. As the degree of integration of electronic devices increases, when foreign substances generated during the manufacturing or assembly process remain inside the electronic device, the foreign substances may cause a short circuit between components or between electrical lines. The short circuit caused by foreign substances may cause malfunction or deterioration (or distortion) of operation performance of the component(s) (e.g., antennas). When a foreign substance is attached to a component such as an antenna by the magnetic field of the magnetic component, a deviation in communication performance may occur between electronic devices of the same specifications.

An embodiment of the disclosure is intended to at least address the foregoing issues and/or shortcomings and provide at least the advantages described below, and may provide an electronic device capable of suppressing or alleviating malfunction or deterioration of operation performance of component(s) (e.g., an antenna) due to foreign substances.

An embodiment of the disclosure may provide an electronic device capable of suppressing a short circuit due to a foreign substance even when it is disposed adjacent to a magnetic force component.

Objects of the disclosure are not limited to the foregoing, and other unmentioned objects would be apparent to one of ordinary skill in the art from the following description.

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims.

The singular forms "a," "an," and "the" are intended to include the plural forms as well, unless the context clearly indicates otherwise. Thus, as an example, "a component surface" may be interpreted as including one or more of the surfaces of a component.

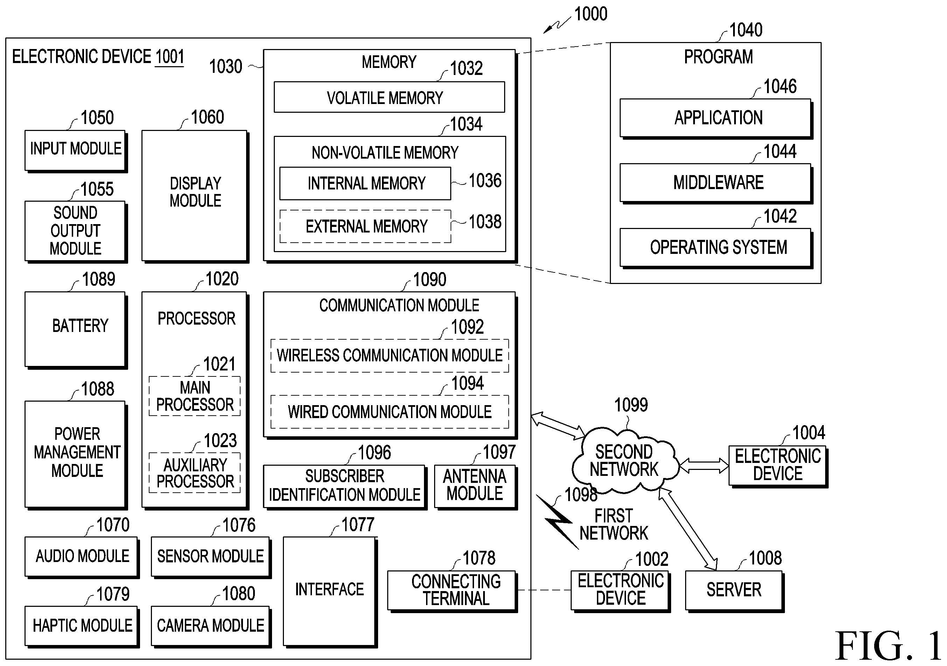

FIG. 1 is a block diagram illustrating an electronic device 1001 in a network environment 1000 according to an embodiment of the disclosure. Referring to FIG. 1, the electronic device 1001 in the network environment 1000 may communicate with at least one of an electronic device 1002 via a first network 1098 (e.g., a short-range wireless communication network), or an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In an embodiment, at least one (e.g., the connecting terminal 1078) of the components may be omitted from the electronic device 1001, or one or more other components may be added in the electronic device 101. According to an embodiment, some (e.g., the sensor module 1076, the camera module 1080, or the antenna module 1097) of the components may be integrated into a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1001 includes the main processor 1021 and the auxiliary processor 1023, the auxiliary processor 1023 may be configured to use lower power than the main processor 1021 or to be specified for a designated function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 123. According to an embodiment, the auxiliary processor 1023 (e.g., the neural processing unit) may include a hardware structure specified for artificial intelligence model processing. The artificial intelligence model may be generated via machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by other component (e.g., the processor 1020) of the electronic device 1001, from the outside (e.g., a user) of the electronic device 1001. The input module 1050 may include, for example, a microphone, a mouse, a keyboard, keys (e.g., buttons), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display 1060 may include, for example, a display, a hologram device, or a projector and control circuitry to control a corresponding one of the display, hologram device, and projector. According to an embodiment, the display 1060 may include a touch sensor configured to detect a touch, or a pressure sensor configured to measure the intensity of a force generated by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., the electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 101, and then generate an electrical signal or data value corresponding to the detected state. According to an embodiment, the sensor module 1076 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or motion) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to an embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via a first network 1098 (e.g., a short-range communication network, such as Bluetooth^{™}, wireless-fidelity (Wi-Fi) direct, or infrared data association (IrDA)) or a second network 1099 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1092 may identify or authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 1097 may include a plurality of antennas (e.g., an antenna array). In this case, at least one antenna appropriate for a communication scheme used in a communication network, such as the first network 1098 or the second network 1099, may be selected from the plurality of antennas by, e.g., the communication module 1090. The signal or the power may then be transmitted or received between the communication module 1090 and the external electronic device via the selected at least one antenna. According to an embodiment, other parts (e.g., radio frequency integrated circuit (RFIC)) than the radiator may be further formed as part of the antenna module 1097.

According to an embodiment, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 1001 and the external electronic device 1004 via the server 1008 coupled with the second network 1099. The external electronic devices 1002 or 1004 each may be a device of the same or a different type from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In an embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment(s) of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities. Some of the plurality of entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

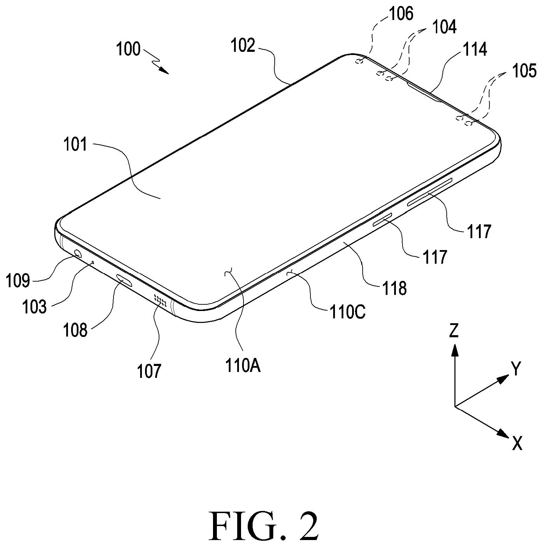

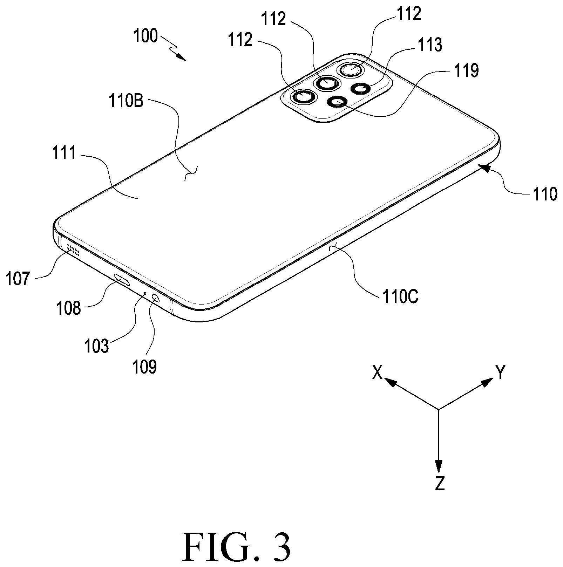

FIG. 2 is a front perspective view illustrating an electronic device 100 according to an embodiment of the disclosure. FIG. 3 is a perspective view illustrating a rear surface of the electronic device 100 of FIG. 2 according to an embodiment of the disclosure.

Referring to FIGS. 2 and 3, according to an embodiment, an electronic device 100 (e.g., the electronic device 1001 of FIG. 1) may include a housing 110 including a first surface (or front surface) 110A, a second surface (or rear surface) 110B, and a side surface 110C surrounding a space between the first surface 110A and the second surface 110B. According to an embodiment (not shown), the housing 110 may denote a structure forming the first surface 110A of FIG. 2, the second surface 110B of FIG. 3, and some of the side surfaces 110C. According to an embodiment, at least part of the first surface 110A may have a substantially transparent front plate 102 (e.g., a glass plate or polymer plate including various coat layers). The second surface 110B may be formed of a substantially opaque rear plate 111. The rear plate 111 may be formed of, e.g., laminated or colored glass, ceramic, polymer, metal (e.g., aluminum, stainless steel (STS), or magnesium), or a combination of at least two thereof. The side surface 110C may be formed by a side structure (or a "side bezel structure") 118 that couples to the front plate 102 and the rear plate 111 and includes a metal and/or polymer. In an embodiment, the rear plate 111 and the side structure 118 may be integrally formed together and include the same material (e.g., a metal, such as aluminum).

Although not shown, the front plate 102 may include area(s) that bend from at least a portion of an edge toward the rear plate 111 and seamlessly extend. In an embodiment, only one of the areas of the front plate 102 (or the rear plate 111), which bend to the rear plate 111 (or front plate 102) and extend may be included in one edge of the first surface 110A. According to an embodiment, the front plate 102 or rear plate 111 may be substantially flat and, in this case, may not include an area bending and extending. When an area bending and extending is included, the thickness of the electronic device 100 at the portion including the area bending and extending may be smaller than the thickness of the rest.

According to an embodiment, the electronic device 100 may include at least one of a display 101, an audio module (e.g., the microphone hole 103, the external speaker hole 107, and the phone receiver hole 114), a sensor module (e.g., the first sensor module 104, the second sensor module (not illustrated), or the third sensor module 119), a camera module (e.g., the first camera device 105, the second camera device 112, or the flash 113), a key input device 117, a light emitting device 106, and a connector hole (e.g., the first connector hole 108 or the second connector hole 109). In an embodiment, the electronic device 100 may exclude at least one (e.g., the key input device 117 or the light emitting device 106) of the components or may add other components.

The display 101 may output a screen or be visually exposed through a significant portion of the first surface 110A (e.g., the front plate 102), for example. In an embodiment, at least a portion of the display 101 may be visually exposed through the front plate 102 forming the first surface 110A, or through a portion of the side surface 110C. In an embodiment, the edge of the display 101 may be formed to be substantially the same in shape as an adjacent outer edge of the front plate 102. In an embodiment (not illustrated), the interval between the outer edge of the display 101 and the outer edge of the front plate 102 may remain substantially even to give a larger area of visual exposure of the display 101.

In an embodiment (not shown), a recess or an opening may be formed in a portion of the screen display area of the display 101, and there may be included at least one of an audio module (e.g., the phone receiver hole 114), a sensor module (e.g., the first sensor module 104), a camera module (e.g., the first camera device 105), and a light emitting device 106 that are aligned with the recess or the opening. In an embodiment (not shown), at least one of the audio module (e.g., the phone receiver hole 114), sensor module (e.g., the first sensor module 104), camera module (e.g., the first camera device 105), fingerprint sensor (not shown), and light emitting device 106 may be included on the rear surface of the screen display area of the display 101. In an embodiment (not illustrated), the display 101 may be disposed to be coupled with, or adjacent, a touch detecting circuit, a pressure sensor capable of measuring the strength (pressure) of touches, and/or a digitizer for detecting a magnetic field-type stylus pen. In an embodiment, when the front plate 102 or the rear plate 111 includes a bent and extended area(s), at least some of the sensor modules (e.g., the first sensor module 104 and the third sensor module 119) and/or at least some of the key input devices 117 may be disposed in the bent and extended area(s).

The audio modules 103, 107, and 114 may include a microphone hole 103 and speaker holes (e.g., the external speaker hole 107 and the phone receiver hole 114). A microphone for acquiring external sounds may be disposed in the microphone hole 103. In an embodiment, a plurality of microphones may be disposed to detect the direction of the sound. The speaker holes may include an external speaker hole 107 and a phone receiver hole 114. According to an embodiment, the speaker holes (e.g., the external speaker hole 107 and the phone receiver hole 114) and the microphone hole 103 may be implemented as a single hole, or speakers may be included without the speaker holes (e.g., the external speaker hole 107 and the phone receiver hole 114) (e.g., piezo speakers).

The sensor module may generate an electrical signal or data value corresponding to an internal operating state or external environmental state of the electronic device 100. The sensor modules may include a first sensor module 104 (e.g., a proximity sensor) and/or a second sensor module (not shown) (e.g., a fingerprint sensor) disposed on the first surface 110A of the housing 110 and/or a third sensor module 119 disposed on the second surface 110B of the housing 110. The second sensor module (not shown) (e.g., a fingerprint sensor) may be disposed on the second surface 110B or side surface 110C as well as the first surface 110A (e.g., the display 101) of the housing 110. The electronic device 100 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules may include a first camera device 105 disposed on the first surface 110A of the electronic device 100, and a second camera device 112 and/or a flash 113 disposed on the second surface 110B. The camera devices (e.g., the first camera device 105 and the second camera device 112) may include one or more lenses, an image sensor, and/or an image signal processor. The flash 113 may include, e.g., a light emitting diode or a xenon lamp. In an embodiment, one or more lenses (an infrared (IR) camera, a wide-angle lens, and a telephoto lens) and image sensors may be disposed on one surface of the electronic device 100. In an embodiment, flash 113 may emit infrared light. The infrared light emitted by the flash 113 and reflected by the subject may be received through the third sensor module 119. The electronic device 100 or the processor (e.g., the processor 1020 of FIG. 1) of the electronic device 100 may detect depth information about the subject based on the time point when the infrared light is received from the third sensor module 119.

The key input device 117 may be disposed on the side surface 110C of the housing 110. In an embodiment, the electronic device 100 may exclude all or some of the above-mentioned key input devices 117 and the excluded key input devices 117 may be implemented in other forms, e.g., as soft keys, on the display 101. In an embodiment, the key input device may include the sensor module disposed on the second surface 110B of the housing 110.

The light emitting device 106 may be disposed on, e.g., the first surface 110A of the housing 110. The light emitting device 106 may provide, e.g., information about the state of the electronic device 100 in the form of light. In an embodiment, the light emitting device 106 may provide a light source that interacts with, e.g., the camera module (e.g., the first camera device 105). The light emitting device 106 may include, e.g., a light emitting diode (LED), an infrared (IR) LED, or a xenon lamp.

The connector holes (e.g., the first connector hole 108 or the second connector hole 109) may include, e.g., a first connector hole 108 for receiving a connector (e.g., a USB connector) for transmitting/receiving power and/or data to/from an external electronic device (e.g., the electronic device 1002 of FIG. 1) and/or a second connector hole 109 (e.g., an earphone jack) for receiving a connector for transmitting/receiving audio signals to/from the external electronic device.

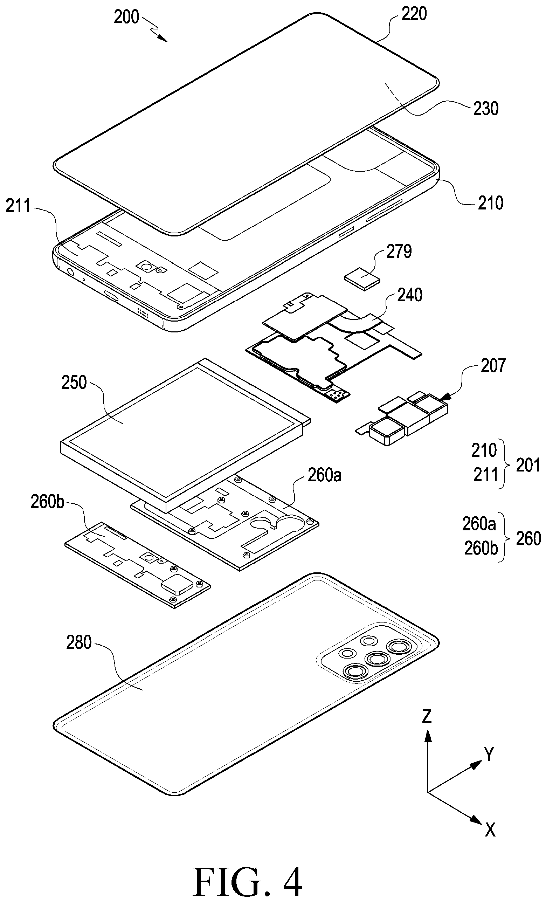

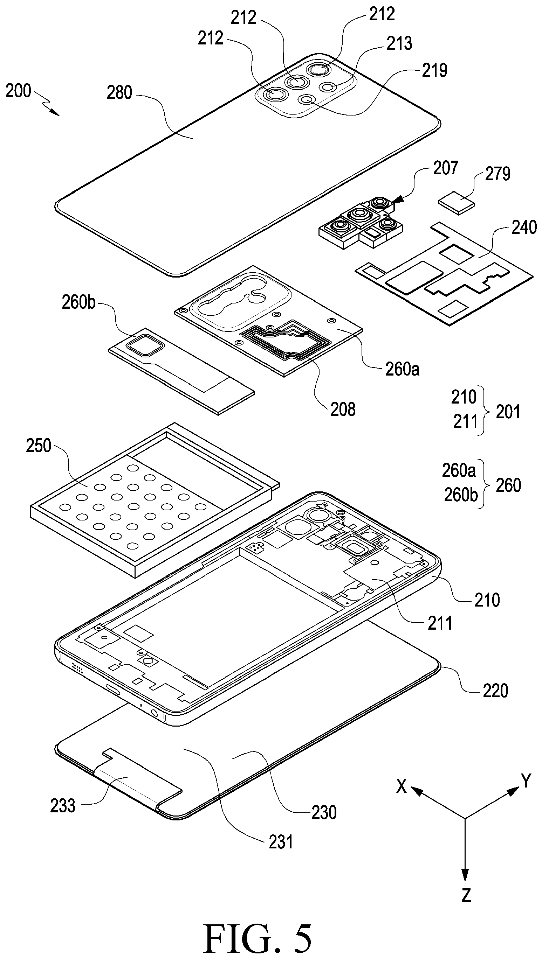

FIG. 4 is an exploded front perspective view illustrating the electronic device 200 of FIG. 2, according to an embodiment of the disclosure. FIG. 5 is a rear exploded perspective view illustrating the electronic device 200 of FIG. 2 according to an embodiment of the disclosure.

Referring to FIGS. 4 and 5, an electronic device 200 (e.g., the electronic device 1001, 1002, 1004, or 100 of FIG. 1, 2, or 3) may include a side structure 210, a first supporting member 211 (e.g., a bracket), a front plate 220 (e.g., the front plate 102 of FIG. 2), a display 230 (e.g., the display 101 of FIG. 2), a printed circuit board (or a board assembly) 240, a battery 250, a second supporting member 260 (e.g., a rear case), an antenna (e.g., the antenna pattern 208), a camera assembly 207, and a rear plate 280 (e.g., the rear plate 111 of FIG. 3). In an embodiment, the electronic device 200 may exclude at least one (e.g., the first supporting member 211 or the second supporting member 260) of the components or may add other components. At least one of the components of the electronic device 200 may be the same or similar to at least one of the components of the electronic device 100 of FIG. 2 or 3 and no duplicate description is made below.

The first supporting member 211 may be disposed inside the electronic device 200 to be connected with the side surface structure 210 or integrated with the side surface structure 210. The first supporting member 211 may be formed of, e.g., a metallic material and/or non-metallic material (e.g., polymer). When at least partially formed of a metallic material, a portion of the side structure 210 or the first supporting member 211 may function as an antenna. The display 230 may be joined onto one surface of the first supporting member 211, and the printed circuit board 240 may be joined onto the opposite surface of the first supporting member 232. A processor (e.g., the processor 1020 of FIG. 1), memory (e.g., the memory 1030 of FIG. 1), and/or an interface (e.g., the interface 1077 of FIG. 1) may be mounted on the printed circuit board 240. The processor may include one or more of, e.g., a central processing unit, an application processor, a graphic processing device, an image signal processing, a sensor hub processor, or a communication processor.

According to various embodiments, the first supporting member 211 and the side structure 210 may be collectively referred to as a front case or a housing 201. According to an embodiment, the housing 201 may be generally understood as a structure for receiving, protecting, or disposing the printed circuit board 240 or the battery 250. In an embodiment, the housing 201 may be understood as including a structure that the user may visually or tactfully recognize from the exterior of the electronic device 200, e.g., the side structure 210, the front plate 220, and/or the rear plate 280. In an embodiment, the 'front or rear surface of the housing 201' may mean the first surface 110A of FIG. 2 or the second surface 110B of FIG. 3. In an embodiment, the first supporting member 211 may be disposed between the front plate 220 (e.g., the first surface 110A of FIG. 2) and the rear plate 280 (e.g., the second surface 110B of FIG. 3) and may function as a structure for placing an electrical/electronic component, such as the printed circuit board 240 or the camera assembly 207.

The display 230 may include a display panel 231 and a flexible printed circuit board 233 extending from the display panel 231. It may be understood that the flexible printed circuit board 233 is, e.g., electrically connected to the display panel 231 while at least partially disposed on the rear surface of the display panel 231. In an embodiment, reference number '231' may be understood as a protective sheet disposed on the rear surface of the display panel. For example, the protective sheet may be understood as a portion of the display panel 231 unless otherwise designated in the detailed description below. In an embodiment, the protective sheet may function as a cushioning structure that absorbs external force (e.g., a low-density elastic material, such as a sponge) or an electromagnetic shielding structure (e.g., a copper sheet (CU sheet)). According to an embodiment, the display 230 may be disposed on the inner surface of the front plate 220 and, by including a light emitting layer, output a screen through at least a portion of the front plate 220 or the first surface 110A of FIG. 2. As mentioned above, the display 230 may output substantially the entire area of the front plate 220 or the first surface 110A of FIG. 2.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 200 with an external electronic device and may include a USB connector, an SD card/multimedia card (MMC) connector, or an audio connector.

The second supporting member 260 may include, e.g., an upper supporting member 260a and a lower supporting member 260b. In an embodiment, the upper supporting member 260a, together with a portion of the first supporting member 211, may be disposed to surround the printed circuit board 240. A circuit device (e.g., a processor, a communication module, or memory) implemented in the form of an integrated circuit chip or various electrical/electronic components may be disposed on the printed circuit board 240. According to an embodiment, the printed circuit board 240 may receive an electromagnetic shielding environment from the upper supporting member 260a. In an embodiment, the lower supporting member 260b may be utilized as a structure in which electrical/electronic components, such as a speaker module and an interface (e.g., a USB connector, an SD card/MMC connector, or an audio connector) may be disposed. In an embodiment, electrical/electronic components, such as a speaker module and an interface (e.g., a USB connector, an SD card/MMC connector, or an audio connector) may be disposed on an additional printed circuit board (not shown). In this case, the lower supporting member 260b, together with the other part of the first supporting member 211, may be disposed to surround the additional printed circuit board. A speaker module or interface disposed on an additional printed circuit board (not shown) or lower supporting member 260b may be disposed corresponding to the connector hole (e.g., the first connector hole 108 or the second connector hole 109) or the audio module (e.g., the microphone hole 103 or the speaker hole (e.g., the external speaker hole 107 or the phone receiver hole 114)) of FIG. 2.

The battery 250 may be a device for supplying power to at least one component of the electronic device 200. The battery 450 may include, e.g., a primary cell which is not rechargeable, a secondary cell which is rechargeable, or a fuel cell. At least a portion of the battery 250 may be disposed on substantially the same plane as the printed circuit board 240. The battery 250 may be integrally or detachably disposed inside the electronic device 200.

According to an embodiment, the antenna may include a conductor pattern (e.g., the antenna pattern 208) implemented on a surface of the second supporting member 260 (e.g., the upper supporting member 260a), e.g., through a laser direct structuring (LDS) technique. **In** an embodiment, the antenna may include a printed circuit pattern formed on the surface of the thin film (not shown). The thin film-type antenna may be disposed between the rear plate 280 and the battery 250. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. **In** an embodiment of the present invention, another antenna structure may be formed by a portion or combination of the side structure 210 and/or the first supporting member 211.

The camera assembly 207 may include at least one camera module. Inside the electronic device 200, the camera assembly 207 may receive at least a portion of the light incident through the optical hole or the camera windows 212, 213, and 219. **In** an embodiment, the camera assembly 207 may be disposed on the first supporting member 211 in a position adjacent to the printed circuit board 240. **In** an embodiment, the camera module(s) of the camera assembly 207 may be generally aligned with either one of the camera windows 212, 213, and 219 and be a least partially surrounded by the second supporting member 260 (e.g., the upper supporting member 260a).

According to an embodiment, the electronic device 200 may further include a speaker module 279 disposed adjacent to the upper supporting member 260a. For example, the speaker module 279 may be disposed to at least partially overlap the upper supporting member 260a in the Z-axis direction. In an embodiment, the upper supporting member 260a may be partially disposed between the speaker module 279 and the second surface 110B of FIG. 3. When the lower supporting member 260b is used as a structure for disposing the speaker module, the speaker module 279 may be combined with the speaker module disposed adjacent to the lower supporting member 260b to implement stereo sound. In an embodiment, the antenna pattern 208 may provide a function of transmitting/receiving a signal or power implemented through the communication module 1090 or the antenna module 1097 of FIG. 1. For example, the processor 1020 or the communication module 1090 of FIG. 1 may be configured to perform NFC, Wi-Fi, GNSS, or Bluetooth-based communication using the antenna pattern 208 or to perform a wireless power transmission/reception function.

According to an embodiment, the antenna pattern 208 may be a structure attached to the surface of an antenna carrier (e.g., the upper supporting member 260a) by processing a conductive tape or copper film. In an embodiment, the antenna pattern 208 may include a laser direct structuring pattern. For example, after the surface of the upper supporting member 260a is processed with a laser to form a designated pattern, an antenna pattern 208 may be formed through plating, deposition, and/or coating processes.

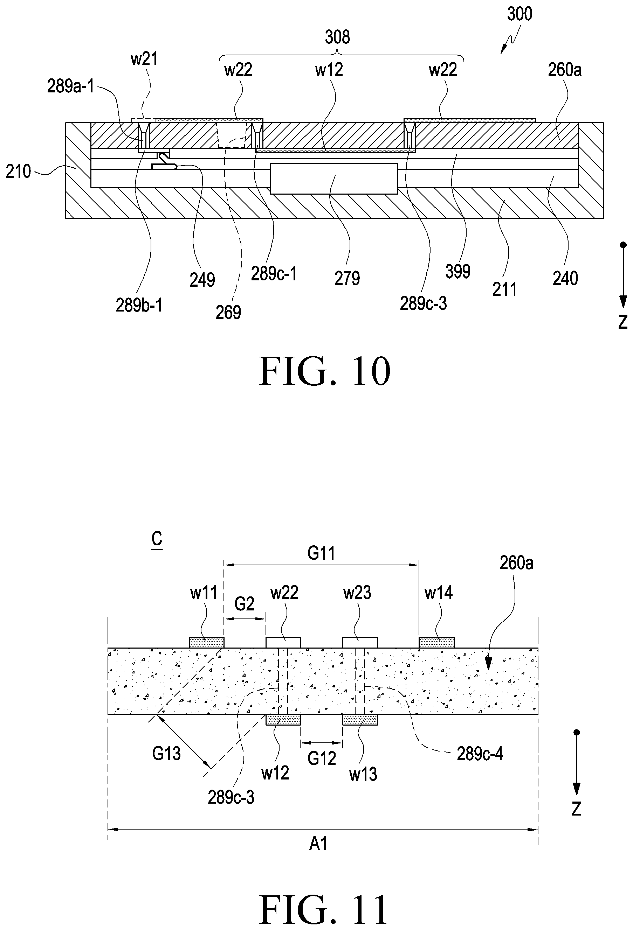

According to an embodiment, the magnetic force component, e.g., the speaker module 279, may be disposed between the front surface (e.g., the first surface 110A of FIG. 2) and the rear surface (e.g., the second surface 110B of FIG. 3) of the housing 201, and the antenna pattern 208 may be disposed on one surface of the supporting member (e.g., the upper supporting member 260a). The term "one surface of the upper supporting member 260a" may be understood as a surface of two opposite surfaces of the upper supporting member 260a facing the rear surface (e.g., the second surface 110B of FIG. 3) or a surface facing the -Z direction. In an embodiment, the electronic device 200 may include an electromagnetic shielding member such as a ferrite film (e.g., the shielding member 399 of FIG. 10), thereby suppressing electromagnetic interference between the speaker module 279 and the antenna pattern 208.

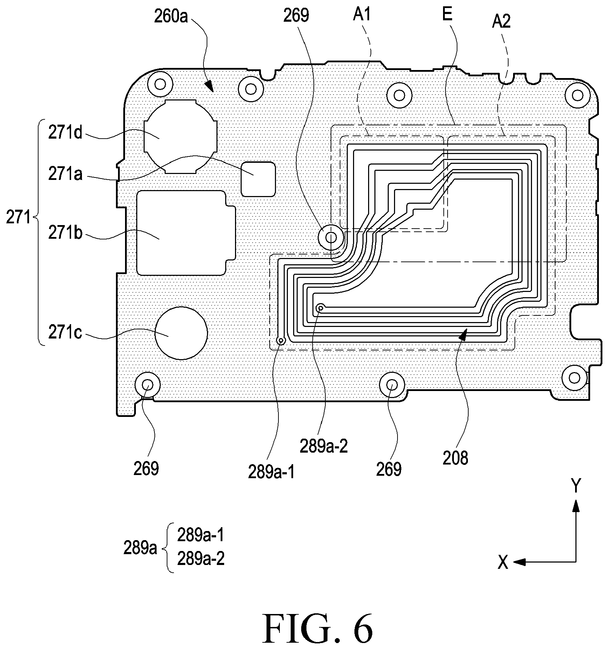

According to an embodiment, a foreign substance detached from the metal structure may occur during the process of assembling the electronic device 200, e.g., fastening a binding structure such as a screw or a hook. Even if the shielding member 399 is disposed, the foreign substances may be attached to the upper supporting member 260a by the magnetic force of a magnetic force component such as the speaker module 279. For example, in a structure in which at least a portion of the upper supporting member 260a and/or antenna pattern 208 is disposed between the magnetic force component and the rear surface, foreign substances may come into contact with the antenna pattern 208 disposed on the surface, facing the rear surface, on the upper supporting member 260a, causing a short circuit. Such a short circuit may cause an error in the communication function or distort the electrical length of the antenna pattern 208, thereby deteriorating wireless communication performance. Embodiment(s) of the disclosure may suppress foreign substances from contacting the antenna pattern 208 or, although the foreign substances contact the antenna pattern 208, may suppress a short circuit. Embodiment(s) of the disclosure is described in more detail with reference to FIGS. 6 to 13.

In FIGS. 2 to 5 illustrating the above-described electronic device 200, the X-axis, the Y-axis, and the Z-axis are illustrated, but it should be noted that it is for simplicity of description of 'direction(s)' referred to in the above-described or following embodiments. For example, the orthogonal coordinate system of the embodiment of FIGS. 2 to 5 and/or the embodiment described below is for convenience of description, and the orthogonal coordinate system may be defined differently from that illustrated in the drawings depending on the structure and specifications of the electronic device to be actually manufactured or the user's usage habit. In describing an embodiment to be described below, the embodiments of FIGS. 1 to 5 may be referred to for simplicity of description.

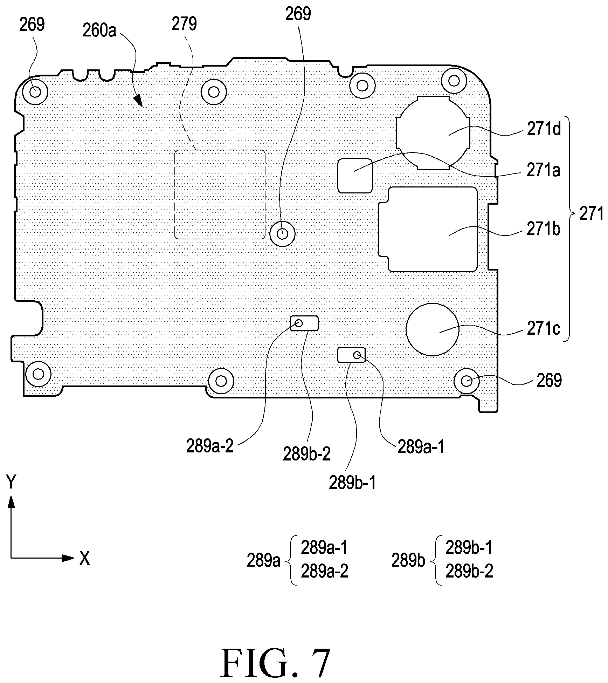

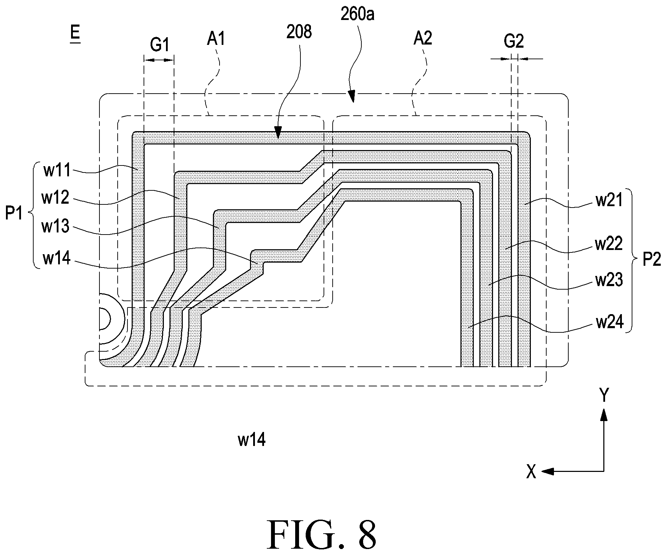

FIG. 6 is a view illustrating a second supporting member (e.g., the upper supporting member 260a) of an electronic device (e.g., the electronic device 1001, 1002, 1004, 100 and 200 of FIGS. 1 to 5) as viewed in a +Z direction, according to an embodiment of the disclosure. FIG. 7 is a view illustrating a second supporting member of an electronic device 200 as viewed in a -Z direction according to an embodiment of the disclosure. FIG. 8 is an enlarged view illustrating a portion 'E' of FIG. 6 according to an embodiment of the disclosure.

Referring to FIGS. 6 to 8, the electronic device 200 may include an antenna pattern 208 implemented on a supporting member (e.g., the upper supporting member 260a of FIG. 4 or FIG. 5). The antenna pattern 208 may be a conductive pattern implemented by the LDS method. In an embodiment, the processor 1020 or the communication module 1090 of FIG. 1 may be configured to perform at least near-field communication among various communication protocols. Although an example is illustrated in which the antenna pattern 208 mentioned in the present embodiment is disposed on the upper supporting member 260a, it should be noted that the embodiment(s) of the disclosure are not limited thereto. For example, an additional antenna pattern or conductive member may be disposed on the first supporting member 211 or the lower supporting member 260b, and the processor 1020 or the communication module 1090 of FIG. 1 may be configured to perform wireless communication based on different communication protocols using the additional antenna pattern or conductive member. The communication protocol of wireless communication performed by the electronic device 200 may be easily understood through detailed descriptions referring to embodiments of FIGS. 1 to 5.

According to an embodiment, the upper supporting member 260a may include at least one opening 271a, 271b, 271c, and 271d corresponding to the camera assembly 207. The opening 271 may correspond to the shape of the camera assembly 207, as illustrated in FIG. 5. In the embodiment illustrated in FIG. 6, the opening 271 may include a plurality of holes indicated by '271a', '271b', '271c', and/or '271d'. For example, the upper supporting member 260a may provide an optical path corresponding to the individual camera or light source of the camera assembly 207.

According to an embodiment, the antenna pattern 208 is a metal pattern or conductive pattern formed through an LDS process, and may be one line, and have a loop shape wound at least twice when viewed from the rear surface (e.g., when viewed along the Z-axis direction). In the illustrated embodiment, the antenna pattern 208 may include one line wound four times. For example, according to the specifications required by the electronic device 200, the number of times the antenna pattern 208 is wound may be appropriately selected, and/or the antenna pattern 208 may include multiple lines or may have a branched structure while being one line. In an embodiment, the antenna pattern 208 may be disposed on one surface of the supporting member (e.g., the upper supporting member 260a), where the term "one surface of the supporting member" may be understood as a surface facing the rear surface of the electronic device 200 or a surface facing the -Z direction. In an embodiment, the 'other surface of the supporting member' may be understood as a surface facing the front surface of the electronic device 200 or a surface facing the +Z direction.

According to an embodiment, the other surface of the upper supporting member 260a is a surface substantially facing the printed circuit board 240 of FIG. 4 or 5, and the electronic device 200 may further include contact pads 289b; 289b-1 and 289b-2 disposed on the other surface of the upper supporting member 260a. The contact pads 289b may be formed through an LDS process similar to the antenna pattern 208, for example. In an embodiment, at least one of two opposite ends of the antenna pattern 208 may be electrically connected to any one of the contact pads 289b through a first via (or first via conductor) 289a; 289a-1 and 289a-2. For example, the first via 289a is provided to penetrate the upper supporting member 260a to electrically connect any one of two opposite ends of the antenna pattern 208 to one of the contact pads 289b. In an embodiment, a pair of first vias 289a may be provided respectively corresponding to two opposite ends of the antenna pattern 208. As is described with reference to the embodiment of FIG. 10, the antenna pattern 208 may be electrically connected to the printed circuit board 240 through contact pad(s) 289b and/or contact terminal(s) 249.

According to an embodiment, the antenna pattern 208 may have a loop shape wound at least twice, so that two different portions at any position or area may be disposed adjacent and side by side to each other. When the distance between two different portions of the antenna pattern 208 is disposed close enough to be within about 1 mm (e.g., about 0.6 mm), a short circuit may occur between two different portions of the antenna pattern 208 by the attachment of conductive foreign substances. When a magnetic force component (e.g., the speaker module 279 of FIG. 4 or FIG. 5) is disposed on the other surface (e.g., the surface facing the +Z direction) of the upper supporting member 260a, a possibility that foreign substances are attached to one surface of the upper supporting member 260a may be increased. For example, when the antenna pattern 208 partially overlaps the magnetic force component in the Z-axis direction, the possibility of a short circuit may increase.

According to an embodiment, when the upper supporting member 260a has a structure bound to the housing (e.g., the first supporting member 211 of FIG. 4 or FIG. 5) by a mechanical structure such as a screw or hook, the upper supporting member 260a may include a boss hole(s) 269 (or binding hole). In the process of binding or assembling the upper supporting member 260a, conductive foreign substances may be detached from structures such as the upper supporting member 260a, the first supporting member 211, and/or the screw. In a structure in which the boss hole 269 is disposed adjacent to an area in which the antenna pattern 208 is disposed (e.g., the first area A1 or the second area A2), the detached foreign substances may contact the antenna pattern 208, causing a short circuit.

According to an embodiment of the disclosure, a short circuit caused by a foreign substance may be suppressed by sufficiently securing a gap between two adjacent portions of the antenna pattern 208 in an area (e.g., the first area A1) overlapping a magnetic force component (e.g., the speaker module 279 of FIG. 4 or FIG. 5) in at least the Z-axis direction. The area indicated by 'A1' in FIG. 6 or FIG. 8 is a portion of the area where the antenna pattern 208 is disposed, illustrating an area that substantially overlaps a magnetic force component (e.g., the speaker module 279 in FIG. 4 or FIG. 5) in the Z-axis direction, and is referred to as a ' first area A1'. The area indicated by 'A2' in FIG. 8 is at least another portion of the area where the antenna pattern 208 is disposed, illustrating an area that does not substantially overlap the magnetic force component in the Z-axis direction, and is referred to as a 'second area A2'.

For convenience of description, the first area A1 and the second area A2 are described based on whether the magnetic force component overlaps the magnetic force component in the Z-axis direction, but it should be noted that embodiment(s) of the disclosure are not limited thereto. For example, the first area A1 may refer to an area in which a conductive foreign substance is maintained on the upper supporting member 260a by an attraction force of the magnetic force component. Even if the conductive foreign substance temporarily contacts the antenna pattern 208, in the second area A2, the conductive foreign substance may be easily detached or removed from the upper supporting member 260a or the antenna pattern 208 by shaking of the electronic device 200 generated during actual use.

For convenience of description, different portions of the antenna pattern 208 have been assigned reference numbers 'w11, 'w12, 'w13', and/or 'w14' in the first area A1 of FIG. 8, and reference numbers 'w21, 'w22, 'w23', and/or 'w24' in the second area A2. For example, the portions indicated by the reference number 'w11, 'w12, 'w13, and/or 'w14' illustrate portions extending adjacent and parallel to each other in the first area A1, and may be referred to as a 'first portion P1' below. The portions indicated by the reference number 'w21, 'w22, 'w23, and/or 'w24' illustrate portions extending adjacent and parallel to each other in the second area A2, and may be referred to as a 'second portion P2' below. It should be noted that the partial division of the antenna pattern 208 does not limit the embodiment(s) of the disclosure, but is merely for convenience of description.

According to an embodiment, in plan view, in each of the first area A1 and the second area A2, the antenna pattern 208 may include at least two portions extending adjacent and parallel to each other. Here, the term "viewed in plan view" may refer to a state viewed from the rear surface of the electronic device 200 or a state viewed along the Z-axis direction. According to an embodiment, the gap (hereinafter, a 'first gap G1') between the adjacent portions w11, w12, w13, and/or w14 of the antenna pattern 208 in the first area A1 may be larger than the gap (hereinafter, a 'second gap G2') between the adjacent portions w21, w22, w23, and/or w24 of the antenna pattern 208 in the second area A2. For example, the second gap G2 may be about 1 mm or less (e.g., about 0.6 mm), and the first gap G1 may be about 1 mm or more (e.g., about 3 mm). According to an embodiment, a gap between adjacent portions of the antenna pattern 208 at a boundary portion between the first area A1 and the second area A2 may gradually increase or gradually decrease. For example, farther from the second area A2, the gap (e.g., the first gap G1) between adjacent portions of the antenna pattern 208 may gradually increase.

According to an embodiment, the foreign substance detached during the process of assembling or binding the upper supporting member 260a may have a size of about 1 mm or less (generally, about tens to hundreds of micrometers (µm)). As the adjacent portions (w11, w12, w13, and/or w14) of the antenna pattern 208 are disposed at the first gap (e.g., a gap of about 1mm or more) larger than the second gap in the first area A1 where the magnetic force of the magnetic force component (e.g., the speaker module 279 of FIG. 4 or 5) acts, a short circuit between the two adjacent portions may be suppressed although a conductive foreign substance is attached. Foreign substances attached to the antenna pattern 208 in the second area A2 in which a magnetic force does not act may be easily removed by movement (or shaking) of the electronic device 200. In the above detailed description, the values regarding the first gap G1 or the second gap G2 are mentioned to illustrate a comparison of relative sizes or a gradual increase (or decrease) in value, and it should be noted that embodiments(s) of the disclosure are not limited thereto.

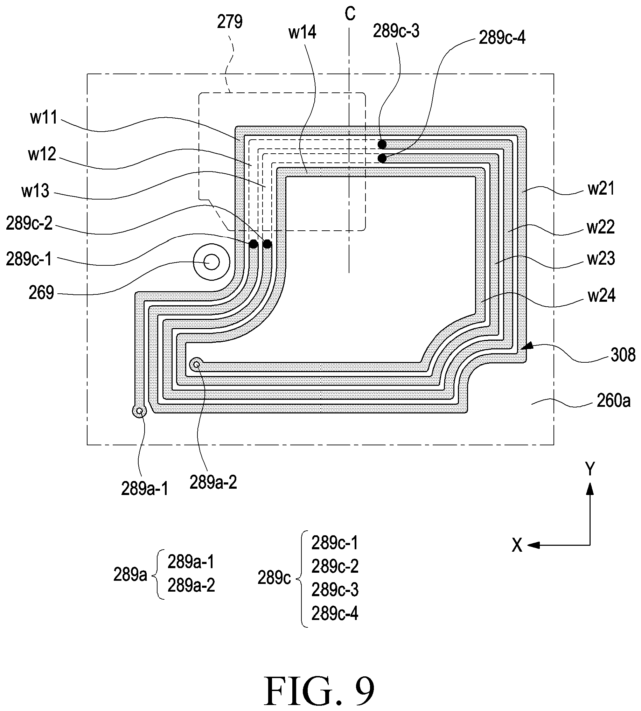

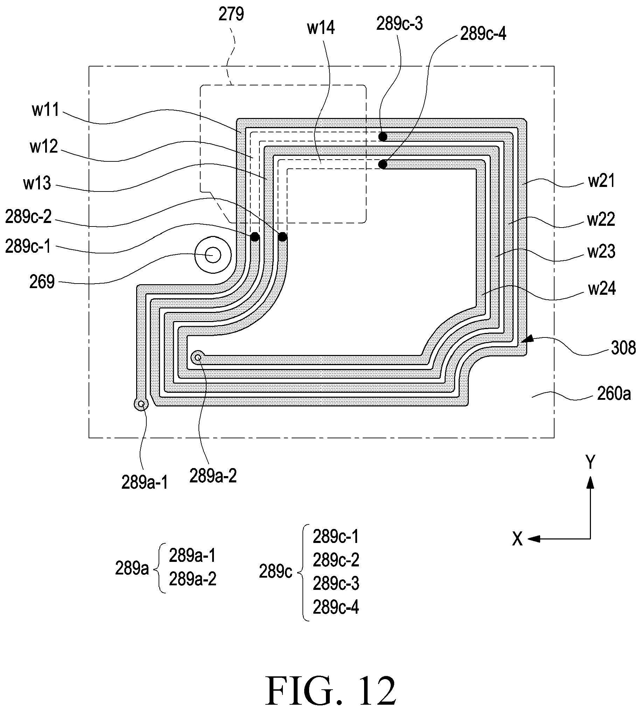

According to an embodiment, in see-through view along the Z-axis direction, the portions w11, w12, w13, w14, w21, w22, w23, and/or w24 of the antenna pattern 208 may be disposed at substantially equal gaps. In see-through view along the Z-axis direction, in the structure in which the portions w11, w12, w13, w14, w22, and/or w24 of the antenna pattern 208 are disposed at substantially equal gaps, at least some of the portions w11, w12, w13, and w14 of the antenna pattern 208 disposed in the first area A1 are disposed on the other surface (e.g., the surface facing the +Z direction) of the upper supporting member 260a, suppressing a short circuit due to a foreign substance. This embodiment is described with reference to FIGS. 9 to 12. It may be understood that the position of the speaker module 279 illustrated in FIGS. 9 and 12 is substantially the same position as the first area A1 of FIG. 6 or 8.

According to an embodiment, an insulating material may be applied to at least a portion of the surface of the antenna pattern 208 in the first area A1. For example, an insulating material may be applied to the surface of at least some (e.g., w11, w22, w23, and/or w14) of the portions of the antenna pattern 208.

FIG. 9 is a view illustrating an antenna pattern 308 (e.g., the antenna pattern 208 of FIG. 5, 6, or 8) of an electronic device 300 (e.g., the electronic device 1001, 1002, 1004, 100, or 200 of FIG. 1 to FIG. 5) according to an embodiment of the disclosure. FIG. 10 is a view describing a structure in which an antenna pattern 308 of an electronic device 300 is disposed according to an embodiment of the disclosure. FIG. 11 is a view illustrating a second supporting member (e.g., the upper supporting member 260a) taken along line C of FIG. 9, according to an embodiment of the disclosure.

Referring to FIGS. 9 to 11, when the antenna pattern 308 (e.g., the antenna pattern 208 of FIG. 5, 6, and/or 8) is disposed, if any one of two adjacent portions is disposed on one surface of the upper supporting member 260a in at least the first area A1, the other of the two adjacent portions may be disposed on the other surface of the upper supporting member 260a. In the illustrated embodiment, a structure in which the w11 portion and the w14 portion of the outer periphery are disposed on one surface of the upper supporting member 260a, and the w12 portion and the w13 portion are disposed on the other surface of the upper supporting member 260a is illustrated. According to an embodiment, a sufficient gap may be provided between the w11 portion and the w14 portion on one surface of the upper supporting member 260a, suppressing a short circuit due to a foreign substance. In an embodiment, even if a foreign substance is present on the other surface of the upper supporting member 260a directly facing the speaker module 279, the foreign substance may not be attached to the upper supporting member 260a (e.g., between the w12 portion and the w13 portion) by the attractive force of the speaker module 279. For example, even if the two portions (e.g., w12 portion and w13 portion) of the antenna pattern 308 are disposed at a fairly close gap within about 1 mm on the other surface of the upper supporting member 260a directly facing the speaker module 279, a short circuit may not occur.

According to an embodiment, portions (e.g., the portions indicated by 'w11' and 'w14') disposed at the outermost edge of the first area A1 may be disposed at a gap of about 3 mm or more on one surface of the upper supporting member 260a. For example, it is possible to secure a sufficient gap between two adjacent portions of the antenna pattern 308 in the first area A1, rather than the second area A2, on one surface of the upper supporting member 260a by distributing and disposing the portions denoted by 'w11', 'w12', 'w13', and/or 'w14' on two opposite surfaces of the upper supporting member 260a in forming the antenna pattern 308 in the first area A1. As a result, even if a foreign substance detached from another structure (e.g., the first supporting member 211 or the upper supporting member 260a) has a significant size, a short circuit may be suppressed between two adjacent portions of the antenna pattern 308 on one surface of the upper supporting member 260a.

FIG. 10 may illustrate an example of an electrical connection structure in distributing and disposing the portions w11, w12, w13, and w14 of the antenna pattern 308 on two opposite surfaces of the upper supporting member 260a. In an embodiment, the electronic device 300 and/or the upper supporting member 260a may further include a second via(s) (or second via conductor) 289c; 289c-1, 289c-2, 289c-3, and 289c-4 connecting the w12 portion of the antenna pattern 308 to the w22 portion. For example, the second via 289c may be provided to penetrate two opposite surfaces of the upper supporting member 260a, thereby electrically connecting the w12 portion of the other surface of the upper supporting member 260a to the w22 portion of the one surface of the upper supporting member 260a. In an embodiment, a pair of second vias 289c may be provided at two opposite ends, respectively, of the w12 portion. For example, the two opposite ends of the w12 portion may be electrically connected to the w22 portion(s) disposed in the second area A2. In an embodiment, the second via 289c may be disposed in an area other than the first area A1. For example, the w11 portion, the w12 portion, the w13 portion, and/or the w14 portion illustrate portions disposed substantially in the first area A1, but when connected to the second via 289c, the w11 portion, the w12 portion, the w13 portion, and/or the w14 portion may be partially disposed in the second area A2.

According to an embodiment, the first via 289a may electrically connect at least one of two opposite ends of the antenna pattern 308 to any one of the contact pads 289b. Inside the electronic device 300, the contact pad 289b may be disposed to substantially face a circuit board (e.g., the printed circuit board 240). In an embodiment, the electronic device 300 may further include a contact terminal(s) 249 disposed on the printed circuit board 240. While the upper supporting member 260a and/or the printed circuit board 240 are disposed or assembled, the contact terminal 249 may contact any one of the contact pads 289b. Accordingly, the antenna pattern 308 may be electrically connected to the printed circuit board 240, the processor 1020 of FIG. 1, and/or the communication module 1090 to transmit and receive a wireless signal. For example, the processor 1020 and/or the communication module 1090 of FIG. 1 may perform wireless communication based on the above-described communication protocol, such as near-field communication, using the antenna pattern 308.

FIG. 11 illustrates a gap between adjacent portions in the arrangement of the antenna pattern 308. Referring to FIGS. 10 and 11, as the portions disposed in the first area A1 are distributed and disposed on two opposite surfaces of the upper supporting member 260a, a significant gap (e.g., the gap indicated by 'G11') may be provided between two portions (e.g., the w11 portion and the w14 portion) of the antenna pattern 308 in the first area A1 of, at least, one surface (e.g., the surface facing the -Z direction) of the upper supporting member 260a. For example, in FIG. 11, the G11 gap may be substantially the same as the gap between the w21 portion and the w24 portion of FIG. 9, and since the w22 portion and the w23 portion of FIG. 9 are disposed between the w21 portion and the w24 portion of FIG. 9, the G11 gap may be substantially three times or more of the second gap G2.

According to an embodiment, the w11 portion and the w12 portion (and/or the w13 portion and the w14 portion) may be disposed adjacent to each other at a substantially second gap G2 when viewed in the Z-axis direction, but may be disposed at a G13 gap larger than the second gap G2 due to the thickness of the upper supporting member 260a. In terms of the first area A1, it may be understood that the w11 portion and the w12 portion are disposed adjacent and parallel to each other, but they are disposed at a gap larger than the second gap G2 on different surfaces of the upper supporting member 260a, substantially suppressing a short circuit between the w11 portion and the w12 portion (and/or between the w13 portion and the w14 portion).

According to an embodiment, the w12 portion and the w13 portion may be disposed adjacent to each other at a G12 gap on the other surface (e.g., the surface facing the +Z direction) of the upper supporting member 260a. In an embodiment, the G12 gap may be substantially the same as the second gap G2. The w12 portion and the w13 portion may be disposed on the other surface of the upper supporting member 260a and may be electrically connected to either the w22 portion or the w23 portion of the second area A2 through the second via(s) 289c. In an embodiment, the other surface of the upper supporting member 260a may be a surface facing the magnetic force component (e.g., the speaker module 279). For example, even if a foreign substance is present in the space around the w12 and w13 portions, a short circuit may not occur between the w12 and w13 portions by moving toward the magnetic force component when the foreign substance is conductive or a material that may be magnetized.

In an embodiment described below, an electrical connection structure between portions of the antenna pattern 308 disposed on different surfaces of the upper supporting member 260a or an electrical connection structure between the antenna pattern 308 and the printed circuit board 240 may be similar to that of the above-described embodiments, and thus a detailed description thereof may be omitted. In an embodiment, the configurations of the above-described embodiments and the configurations of the embodiments described below may be selectively combined to implement additional embodiments, which may be easily understood by those skilled in the art through the appended claims and the disclosure.

FIG. 12 is a view illustrating an antenna pattern 308 (e.g., the antenna pattern 208 of FIG. 5, 6, or 8) of an electronic device (e.g., the electronic devices 1001, 1002, 1004, 100, or 200 of FIG. 1 to FIG. 5) according to an embodiment of the disclosure.

Referring to FIG. 12, the portions w11, w12, w13, and w14 of the antenna pattern 308 may be alternately disposed on two opposite surfaces of the upper supporting member 260a in an area (e.g., the first area A1 of FIG. 6 or FIG. 8) overlapping the speaker module 279 in the Z-axis direction. For example, when viewed in the Z-axis direction, two adjacent portions of the w11 portion, the w12 portion, the w13 portion, and/or the w14 portion may be disposed on different surfaces, respectively, of the upper supporting member 260a. In an embodiment, the w11 portion and the w13 portion may be disposed on one surface of the upper supporting member 260a at a gap larger than the second gap G2 of FIG. 8 or a gap larger than the line width of the w12 portion, and the w12 portion and the w14 portion may be disposed on the other surface of the upper supporting member 260a at a gap larger than the second gap G2 of FIG. 8 or a gap larger than the line width of the w13 portion. For example, a sufficient gap may be provided between the portions w11, w12, w13, and w14 disposed in the first area A1 on two opposite sides of the upper supporting member 260a, thereby suppressing a short circuit caused by foreign substances.

According to an embodiment, in see-through view along the Z-axis direction, it may be understood that the w11 portion and the w12 portion are disposed adjacent and parallel to each other, but since the w11 portion and the w12 portion are disposed on different surfaces of the upper supporting member 260a, a short circuit may not substantially occur due to a foreign substance between the w11 portion and the w12 portion. As such, when the structure of FIG. 12 is provided, e.g., when two adjacent portions of the antenna pattern of the first area are disposed on different surfaces, respectively, of the upper supporting member, although the first area is disposed adjacent to the magnetic force component, a short circuit due to a foreign substance and the magnetic force of the magnetic force component may not substantially occur. Such arrangement and short circuit-suppressed structure may be identically implemented between the w12 portion and the w13 portion or between the w13 portion and the w14 portion.

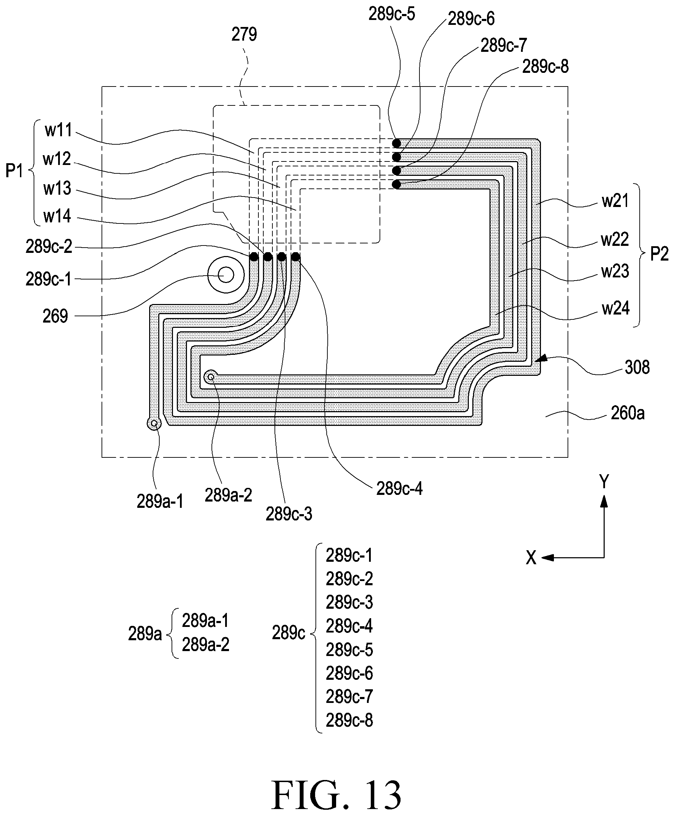

FIG. 13 is a view illustrating an antenna pattern 308 (e.g., the antenna pattern 208 of FIG. 5, 6, or 8) of an electronic device (e.g., the electronic device 1001, 1002, 1004, 100, or 200 of FIGS. 1 to 5) according to an embodiment of the disclosure.

Referring to FIG. 13, the antenna pattern 308 may be generally disposed on one surface of the upper supporting member 260a, and the first portion P1 overlapping the speaker module 279 in the Z-axis direction may be disposed on the other surface of the upper supporting member 260a. As the antenna pattern 308 is partially disposed on different surfaces of the upper supporting member 260a, a second via(s) (or second via conductors) 289c; 289c-1, 289c-2, 289c-3, 289c-4, 289c-5, 289c-6, 289c-7, and 289c-8 penetrating two opposite surfaces of the upper supporting member 260a may be provided. For example, as the antenna pattern 308 is disposed on two different surfaces of the upper supporting member 260a, a trajectory of a loop shape wound at least twice may be implemented.

According to an embodiment, when a foreign substance that may be conductive or magnetized is generated on the other surface of the upper supporting member 260a, the foreign substance may not be substantially attached to the upper supporting member 260a because it is affected by the magnetic force (e.g., attractive force) of the speaker module 279. For example, when the magnetic force of the magnetic force component is disposed in the area or space where the magnetic force of the magnetic force component acts, the antenna pattern 308 is partially disposed on the upper supporting member 260a on the surface facing the speaker module 279, so a short circuit due to foreign substances may not substantially occur.

It was identified that there is no substantial difference in antenna gain, directivity characteristic, and/or recognition distance when the antenna pattern disposed on one surface of the upper supporting member 260a and the antenna pattern 208 or 308 of the above-described embodiment(s) perform wireless communication under the same condition with the first gap G1 and the second gap G2 set to be the same in FIG. 8. For example, as a sufficient gap is secured between two adjacent portions in disposing the antenna pattern 208 or 308 in the electronic device 1001, 1002, 1004, 100, 200, or 300 according to an embodiment(s), it is possible to implement stable wireless communication performance while suppressing a short circuit between two adjacent portions of the antenna pattern although a foreign substance occurs in a mechanical assembly or binding process. In an embodiment, even if a magnetic force component (e.g., the speaker module 279 of FIG. 4 or FIG. 5) is disposed in the electronic device, malfunctions, distortion or deterioration of operating performance that may occur due to foreign substances may be suppressed, thereby increasing the degree of freedom in design in the arrangement of other components such as the antenna pattern.

Effects of the disclosure are not limited to the foregoing, and other unmentioned effects would be apparent to one of ordinary skill in the art from the description of the foregoing embodiment(s).

An electronic device (e.g., the electronic device 1001, 1002, 1004, 100, 200, or 300 of FIGS. 1 to 5 or FIG. 10) may comprise a housing (e.g., the housing 201 of FIG. 4 or 5) including a front surface (e.g., the first surface 110A of FIG. 2) and a rear surface (e.g., the second surface 110B of FIG. 3) facing in a direction opposite to the front surface, a magnetic force component (e.g., the speaker module 279 of FIG. 4 or 5) disposed between the front surface and the rear surface, a supporting member (e.g., the upper supporting member 260a of FIG. 4, 5, 6, or 10) at least partially disposed between the magnetic force component and the rear surface, and an antenna pattern (e.g., the antenna pattern 208 or 308 of FIG. 5, 6, 8, and/or 9) at least partially disposed on one surface of the supporting member facing the rear surface, and disposed along a trajectory of a loop shape wound at least twice as viewed from the rear surface. In an embodiment, a first gap (e.g., the first gap G1 of FIG. 8) between two adjacent portions of the antenna pattern in an area (e.g., the first area A1 of FIG. 6 or 8) between the magnetic force component and the rear surface may be larger than a second gap (e.g., the second gap G2 of FIG. 8) between two adjacent portions of the antenna pattern in a second area (e.g., the second area A2 of FIG. 6 or 8) different from the first area.

In an embodiment, the magnetic component may include a speaker module and/or a microphone module.

According to an embodiment, the electronic device may further comprise contact pads (e.g., the contact pad 289b of FIG. 7) provided on another surface of the supporting member, and at least one first via (e.g., the first via 289a of FIG. 6 or 10) disposed to penetrate the supporting member. In an embodiment, at least one of two opposite ends of the antenna pattern may be electrically connected to any one of the contact pads through the at least one first via.

According to an embodiment, the electronic device may further comprise a circuit board (e.g., the printed circuit board 240 of FIG. 4, 5, and/or 10) disposed between the front surface and the supporting member and at least one contact terminal (e.g., the contact terminal 249 of FIG. 10)disposed on the circuit board. In an embodiment, the at least one contact terminal may be configured to contact any one of the contact pads.

According to an embodiment, in the first area, any one of the two adjacent portions of the antenna pattern may be disposed on one surface (e.g., the surface facing the -Z direction of FIG. 11) of the supporting member, and the other one of the two adjacent portions of the antenna pattern may be disposed on another surface (e.g., the surface facing the +Z direction of FIG. 11) of the supporting member facing the front surface.

According to an embodiment, the electronic device may further comprise at least one second via (e.g., the second via 289c of FIGS. 9 to 11) disposed to penetrate the supporting member. In an embodiment, the other portion of the antenna pattern disposed on the other surface of the supporting member may be electrically connected to a portion of the antenna pattern disposed in the second area through the at least one second via.

According to an embodiment, the electronic device may further comprise a pair of second vias (e.g., the second via 289c of FIGS. 9 to 11) disposed to penetrate the supporting member. In an embodiment, each of two opposite ends of the other portion of the antenna pattern disposed on the other surface of the supporting member may be electrically connected to a portion of the antenna pattern disposed in the second area through any one of the pair of second vias.

According to an embodiment, the pair of second vias may be disposed to penetrate the supporting member in the second area.

According to an embodiment, the electronic device may further comprise a boss hole (e.g., the boss hole 269 of FIG. 6, 8, and/or 10) provided to penetrate the supporting member at a position adjacent to the first area or the second area.

According to an embodiment, the electronic device may further comprise a processor (e.g., the processor 1020 of FIG. 1) or a communication module (e.g., the communication module 1090 of FIG. 1) configured to perform near-field communication (NFC) using the antenna pattern.

According to an embodiment, the antenna pattern may include a laser direct structuring (LDS) pattern.

An electronic device (e.g., the electronic device 1001, 1002, 1004, 100, 200, or 300 of FIGS. 1 to 5 or FIG. 10) may comprise a housing (e.g., the housing 201 of FIG. 4 or 5) including a front surface (e.g., the first surface 110A of FIG. 2) and a rear surface (e.g., the second surface 110B of FIG. 3) facing in a direction opposite to the front surface, a magnetic force component (e.g., the speaker module 279 of FIG. 4 or 5) disposed between the front surface and the rear surface, a supporting member (e.g., the upper supporting member 260a of FIG. 4, 5, 6, or 13) at least partially disposed between the magnetic force component and the rear surface, and an antenna pattern (e.g., the antenna pattern 208 or 308 of FIG. 5, 6, 8, and/or 9) disposed on the supporting member, and disposed along a trajectory of a loop shape wound at least twice as viewed from the rear surface. In an embodiment, the antenna pattern may include a first portion (e.g., the first portion P1 of FIG. 13) at least partially disposed on a surface, facing the front surface, of two opposite surfaces of the supporting member in an area (e.g., the first area A1 of FIG. 6 or 8) between the magnetic force component and the rear surface, and a second portion (e.g., the second portion P2 of FIG. 13) disposed on a surface, facing the rear surface, of the two opposite surfaces of the supporting member in a second area (e.g., the second area A2 of FIG. 6 or 8) different from the first area.

In an embodiment, the magnetic component may include a speaker module.

According to an embodiment, the electronic device may further comprise contact pads (e.g., the contact pad 289b of FIG. 7) provided on a surface, facing the front surface, of two opposite surfaces of the supporting member, and at least one first via (e.g., the first via 289a of FIG. 6 or 10) disposed to penetrate the supporting member. In an embodiment, one end of the second portion may be electrically connected to any one of the contact pads through the at least one first via.

According to an embodiment, the electronic device may further comprise a circuit board (e.g., the printed circuit board 240 of FIG. 4, 5, and/or 10) disposed between the front surface and the supporting member and at least one contact terminal (e.g., the contact terminal 249 of FIG. 10)disposed on the circuit board. In an embodiment, the at least one contact terminal may be configured to contact any one of the contact pads.

According to an embodiment, the electronic device may further comprise at least one second via (e.g., the second via 289c of FIG. 13) disposed to penetrate the supporting member. In an embodiment, the first portion may be electrically connected to the second portion through the at least one second via.

According to an embodiment, the at least one second via may be disposed to penetrate the supporting member in the second area.

According to an embodiment, the electronic device may further comprise a boss hole (e.g., the boss hole 269 of FIG. 6, 8, and/or 13) provided to penetrate the supporting member at a position adjacent to the first area or the second area.

According to an embodiment, the electronic device may further comprise a processor (e.g., the processor 1020 of FIG. 1) or a communication module (e.g., the communication module 1090 of FIG. 1) configured to perform near-field communication (NFC) using the antenna pattern.

According to an embodiment, the antenna pattern may include a laser direct structuring (LDS) pattern.

While the disclosure has been described and shown in connection with an embodiment thereof, it should be appreciated that an embodiment is intended as limiting the invention but as illustrative. It will be apparent to one of ordinary skill in the art that various changes may be made in form and detail without departing from the overall scope of the disclosure, including the appended claims.

## Claims

1. An electronic device (1001, 1002, 1004, 100, 200, 300), comprising:
a housing (201) including a front surface (110A) and a rear surface (110B) facing in a direction opposite to the front surface;
a magnetic force component (279) disposed between the front surface and the rear surface;
a supporting member (260a) at least partially disposed between the magnetic force component and the rear surface; and
an antenna pattern (208; 308) at least partially disposed on one surface of the supporting member facing the rear surface, and disposed along a trajectory of a loop shape wound at least twice as viewed from the rear surface,
**characterized in that** a first gap (G1) between two adjacent portions of the antenna pattern in an area (hereinafter, a 'first area (A1)') between the magnetic force component and the rear surface is larger than a second gap (G2) between two adjacent portions of the antenna pattern in a second area (A2) different from the first area.

2. The electronic device of claim 1, further comprising:
contact pads (289b) provided on another surface of the supporting member; and
at least one first via (289a) disposed to penetrate the supporting member,
wherein at least one of two opposite ends of the antenna pattern is electrically connected to any one of the contact pads through the at least one first via.

3. The electronic device of claim 1 or 2, wherein, in the first area, any one of the two adjacent portions of the antenna pattern is disposed on one surface of the supporting member, and the other one of the two adjacent portions of the antenna pattern is disposed on another surface of the supporting member facing the front surface.

4. The electronic device of claim 3, further comprising at least one second via (289c) disposed to penetrate the supporting member,
wherein the other portion of the antenna pattern disposed on the other surface of the supporting member is electrically connected to a portion of the antenna pattern disposed in the second area through the at least one second via.

5. The electronic device of claim 3, further comprising a pair of second vias (289c) disposed to penetrate the supporting member,
wherein each of two opposite ends of the other portion of the antenna pattern disposed on the other surface of the supporting member is electrically connected to a portion of the antenna pattern disposed in the second area through any one of the pair of second vias.

6. The electronic device of claim 5, wherein the pair of second vias are disposed to penetrate the supporting member in the second area.

7. An electronic device (1001, 1002, 1004, 100, 200, 300), comprising:
a housing (201) including a front surface (110A) and a rear surface (110B) facing in a direction opposite to the front surface;
a magnetic force component (279) disposed between the front surface and the rear surface;
a supporting member (260a) at least partially disposed between the magnetic force component and the rear surface; and
an antenna pattern (208; 308) disposed on the supporting member, and disposed along a trajectory of a loop shape wound at least twice as viewed from the rear surface, **characterized in that** the
antenna pattern includes:
a first portion (P1) at least partially disposed on a surface, facing the front surface, of two opposite surfaces of the supporting member in an area (hereinafter, a 'first area (A1)') between the magnetic force component and the rear surface; and
a second portion (P2) disposed on a surface, facing the rear surface, of the two opposite surfaces of the supporting member in a second area (A2) different from the first area.

8. The electronic device of claim 1 or 7, wherein the magnetic force component includes a speaker module.

9. The electronic device of claim 7 or 8, further comprising:
a contact pad (289b) provided on the surface, facing the front surface, of the two opposite surfaces of the supporting member; and
at least one first via (289a) disposed to penetrate the supporting member,
wherein one end of the second portion is electrically connected to any one of the contact pads through the at least one first via.

10. The electronic device of claim 2 or 9, further comprising:
a circuit board (240) disposed between the front surface and the supporting member; and
at least one contact terminal (249) disposed on the circuit board,
wherein the at least one contact terminal is configured to contact any one of the contact pads.

11. The electronic device of any one of claims 7 to 10, further comprising at least one second via (289c) disposed to penetrate the supporting member,
wherein the first portion is electrically connected to the second portion through the at least one second via.

12. The electronic device of claim 11, wherein the at least one second via is disposed to penetrate the supporting member in the second area.

13. The electronic device of any one of claims 1 to 12, further comprising a boss hole (269) provided to penetrate the supporting member at a position adjacent to the first area or the second area.

14. The electronic device of any one of claims 1 to 13, further comprising a processor (1020) or a communication module (1090) configured to perform near-field communication (NFC) using the antenna pattern.

15. The electronic device of any one of claims 1 to 14, wherein the antenna pattern includes a laser direct structuring (LDS) pattern.

## Patentansprüche

1. Elektronische Vorrichtung (1001, 1002, 1004, 100, 200, 300), umfassend:
ein Gehäuse (201) mit einer Frontfläche (110A) und einer Rückfläche (110B), die in eine der Frontfläche entgegengesetzte Richtung weist;
eine magnetische Kraftkomponente (279), die zwischen der Frontfläche und der Rückfläche angeordnet ist;
ein Stützelement (260a), das zumindest teilweise zwischen der magnetischen Kraftkomponente und der Rückfläche angeordnet ist; und
ein Antennenmuster (208; 308), das zumindest teilweise auf einer der Rückfläche zugewandten Oberfläche des Stützelements angeordnet ist und entlang einer Bahn in Form einer Schleife angeordnet ist, die von der Rückfläche aus gesehen mindestens zweimal gewickelt ist,
**dadurch gekennzeichnet, dass**
ein erster Spalt (G1) zwischen zwei benachbarten Abschnitten des Antennenmusters in einem Bereich (im Folgenden "erster Bereich (A1)") zwischen der magnetischen Kraftkomponente und der Rückfläche größer ist als ein zweiter Spalt (G2) zwischen zwei benachbarten Abschnitten des Antennenmusters in einem zweiten Bereich (A2), der sich vom ersten Bereich unterscheidet.

2. Elektronische Vorrichtung nach Anspruch 1, umfassend ferner:
Kontaktpads (289b), die auf einer weiteren Oberfläche des Stützelements vorgesehen sind; und
mindestens eine erste Durchkontaktierung (289a), die so angeordnet ist, dass sie das Stützelement durchdringt,
wobei mindestens eines von zwei gegenüberliegenden Enden des Antennenmusters über die mindestens eine erste Durchkontaktierung mit einem beliebigen der Kontaktpads elektrisch verbunden ist.

3. Elektronische Vorrichtung nach Anspruch 1 oder 2, wobei im ersten Bereich einer der beiden benachbarten Abschnitte des Antennenmusters auf einer Oberfläche des Stützelements und der andere der beiden benachbarten Abschnitte des Antennenmusters auf einer weiteren, der Frontfläche zugewandten Oberfläche des Stützelements angeordnet ist.

4. Elektronische Vorrichtung nach Anspruch 3, umfassend ferner mindestens eine zweite Durchkontaktierung (289c), die so angeordnet ist, dass sie das Stützelement durchdringt,
wobei der andere Abschnitt des Antennenmusters, der auf der anderen Oberfläche des Stützelements angeordnet ist, über die mindestens eine zweite Durchkontaktierung elektrisch mit einem Abschnitt des Antennenmusters verbunden ist, der im zweiten Bereich angeordnet ist.

5. Elektronische Vorrichtung nach Anspruch 3, umfassend ferner ein Paar zweiter Durchkontaktierungen (289c), die so angeordnet sind, dass sie das Stützelement durchdringen,
wobei jedes der beiden gegenüberliegenden Enden des anderen Abschnitts des Antennenmusters, der auf der anderen Oberfläche des Stützelements angeordnet ist, über eine beliebige des Paars zweiter Durchkontaktierungen elektrisch mit einem Abschnitt des Antennenmusters verbunden ist, der in dem zweiten Bereich angeordnet ist.

6. Elektronische Vorrichtung nach Anspruch 5, wobei das Paar zweiter Durchkontaktierungen so angeordnet ist, dass es das Stützelement im zweiten Bereich durchdringt.

7. Elektronische Vorrichtung (1001, 1002, 1004, 100, 200, 300), umfassend:
ein Gehäuse (201) mit einer Frontfläche (110A) und einer Rückfläche (110B), die in eine der Frontfläche entgegengesetzte Richtung weist;
eine magnetische Kraftkomponente (279), die zwischen der Frontfläche und der Rückfläche angeordnet ist;
ein Stützelement (260a), das zumindest teilweise zwischen der magnetischen Kraftkomponente und der Rückfläche angeordnet ist; und
ein Antennenmuster (208; 308), das auf dem Stützelement angeordnet ist und entlang einer Bahn in Form einer Schleife angeordnet ist, die von der Rückfläche aus gesehen mindestens zweimal gewickelt ist, **dadurch gekennzeichnet, dass** das Antennenmuster Folgendes umfasst:
einen ersten Abschnitt (P1), der zumindest teilweise auf einer der Frontfläche zugewandten Oberfläche von zwei gegenüberliegenden Oberflächen des Stützelements in einem Bereich (im Folgenden "erster Bereich (A1)") zwischen der magnetischen Kraftkomponente und der Rückfläche angeordnet ist; und
einen zweiten Abschnitt (P2), der auf einer der Rückfläche zugewandten Oberfläche der beiden gegenüberliegenden Oberflächen des Stützelements in einem zweiten Bereich (A2) angeordnet ist, der sich vom ersten Bereich unterscheidet.

8. Elektronische Vorrichtung nach Anspruch 1 oder 7, wobei die magnetische Kraftkomponente ein Lautsprechermodul umfasst.

9. Elektronische Vorrichtung nach Anspruch 7 oder 8, umfassend ferner:
ein Kontaktpad (289b), das auf der der Frontfläche zugewandten der beiden gegenüberliegenden Flächen des Stützelements vorgesehen ist; und
mindestens eine erste Durchkontaktierung (289a), die so angeordnet ist, dass sie das Stützelement durchdringt,
wobei ein Ende des zweiten Abschnitts über die mindestens eine erste Durchkontaktierung elektrisch mit einem beliebigen der Kontaktpads verbunden ist.

10. Elektronische Vorrichtung nach Anspruch 2 oder 9, umfassend ferner:
eine zwischen der Frontfläche und dem Stützelement angeordnete Schaltplatte (240); und
mindestens einen auf der Schaltplatte angeordneten Kontaktanschluss (249),
wobei der mindestens eine Kontaktanschluss zum Kontaktieren eines beliebigen der Kontaktpads konfiguriert ist.

11. Elektronische Vorrichtung nach einem der Ansprüche 7 bis 10, umfassend ferner mindestens eine zweite Durchkontaktierung (289c), die so angeordnet ist, dass sie das Stützelement durchdringt,
wobei der erste Abschnitt über die mindestens eine zweite Durchkontaktierung elektrisch mit dem zweiten Abschnitt verbunden ist.

12. Elektronische Vorrichtung nach Anspruch 11, wobei die mindestens eine zweite Durchkontaktierung so angeordnet ist, dass sie das Stützelement im zweiten Bereich durchdringt.

13. Elektronische Vorrichtung nach einem der Ansprüche 1 bis 12, umfassend ferner ein Vorsprungsloch (269), das so vorgesehen ist, dass es das Stützelement an einer Position neben dem ersten Bereich oder dem zweiten Bereich durchdringt.

14. Elektronische Vorrichtung nach einem der Ansprüche 1 bis 13, umfassend ferner einen Prozessor (1020) oder ein Kommunikationsmodul (1090), der bzw. das dazu konfiguriert ist, unter Verwendung des Antennenmusters eine Nahfeldkommunikation (NFC) durchzuführen.

15. Elektronische Vorrichtung nach einem der Ansprüche 1 bis 14, wobei das Antennenmuster ein Laser-Direct-Structuring (LDS)-Muster umfasst.

## Revendications

1. Dispositif électronique (1001, 1002, 1004, 100, 200, 300), comprenant :
un boîtier (201) comprenant une surface avant (110A) et une surface arrière (110B) orientée dans une direction opposée à la surface avant ;
un composant de force magnétique (279) disposé entre la surface avant et la surface arrière ;
un élément de support (260a) au moins partiellement disposé entre le composant de force magnétique et la surface arrière ; et
un motif d'antenne (208 ; 308) au moins partiellement disposé sur une surface de l'élément de support faisant face à la surface arrière, et disposé le long d'une trajectoire en forme de boucle enroulée au moins deux fois telle que vue depuis la surface arrière,
**caractérisé en ce que**
un premier espacement (G1) entre deux parties adjacentes du motif d'antenne dans une zone (ci-après, une « première zone (A1) ») entre le composant de force magnétique et la surface arrière est supérieur à un deuxième espacement (G2) entre deux parties adjacentes du motif d'antenne dans une deuxième zone (A2) différente de la première zone.

2. Dispositif électronique selon la revendication 1, comprenant en outre :
des plots de contact (289b) prévus sur une autre surface de l'élément de support ; et
au moins un premier via (289a) disposé de manière à traverser l'élément de support,
dans lequel au moins l'une de deux extrémités opposées du motif d'antenne est électriquement connectée à l'un quelconque des plots de contact par l'intermédiaire de l'au moins un premier via.

3. Dispositif électronique selon la revendication 1 ou 2, dans lequel, dans la première zone, l'une quelconque des deux parties adjacentes du motif d'antenne est disposée sur une surface de l'élément de support, et l'autre des deux parties adjacentes du motif d'antenne est disposée sur une autre surface de l'élément de support faisant face à la surface avant.

4. Dispositif électronique selon la revendication 3, comprenant en outre au moins un deuxième via (289c) disposé de manière à traverser l'élément de support,
dans lequel l'autre partie du motif d'antenne disposée sur l'autre surface de l'élément de support est électriquement connectée à une partie du motif d'antenne disposée dans la deuxième zone par l'intermédiaire de l'au moins un deuxième via.

5. Dispositif électronique selon la revendication 3, comprenant en outre une paire de deuxièmes vias (289c) disposés de manière à traverser l'élément de support,
dans lequel chacune de deux extrémités opposées de l'autre partie du motif d'antenne disposée sur l'autre surface de l'élément de support est électriquement connectée à une partie du motif d'antenne disposée dans la deuxième zone par l'intermédiaire de l'un quelconque de la paire de deuxièmes vias.

6. Dispositif électronique selon la revendication 5, dans lequel la paire de deuxièmes vias est disposée de manière à traverser l'élément de support dans la deuxième zone.

7. Dispositif électronique (1001, 1002, 1004, 100, 200, 300), comprenant :
un boîtier (201) comprenant une surface avant (110A) et une surface arrière (110B) orientée dans une direction opposée à la surface avant ;
un composant de force magnétique (279) disposé entre la surface avant et la surface arrière ;
un élément de support (260a) au moins partiellement disposé entre le composant de force magnétique et la surface arrière ; et
un motif d'antenne (208 ; 308) disposé sur l'élément de support, et disposé le long d'une trajectoire en forme de boucle enroulée au moins deux fois telle que vue depuis la surface arrière, **caractérisé en ce que** le motif d'antenne comprend :
une première partie (P1) au moins partiellement disposée sur une surface, faisant face à la surface avant, de deux surfaces opposées de l'élément de support dans une zone (ci-après, une « première zone (A1) ») entre le composant de force magnétique et la surface arrière ; et
une deuxième partie (P2) disposée sur une surface, faisant face à la surface arrière, des deux surfaces opposées de l'élément de support dans une deuxième zone (A2) différente de la première zone.

8. Dispositif électronique selon la revendication 1 ou 7, dans lequel le composant de force magnétique comprend un module de haut-parleur.

9. Dispositif électronique selon la revendication 7 ou 8, comprenant en outre :
un plot de contact (289b) prévu sur la surface, faisant face à la surface avant, des deux surfaces opposées de l'élément de support ; et
au moins un premier via (289a) disposé de manière à traverser l'élément de support,
dans lequel une extrémité de la deuxième partie est électriquement connectée à l'un quelconque des plots de contact par l'intermédiaire de l'au moins un premier via.

10. Dispositif électronique selon la revendication 2 ou 9, comprenant en outre :
une carte de circuit imprimé (240) disposée entre la surface avant et l'élément de support ; et
au moins une borne de contact (249) disposée sur la carte de circuit imprimé,
dans lequel l'au moins une borne de contact est configurée pour entrer en contact avec l'un quelconque des plots de contact.

11. Dispositif électronique selon l'une quelconque des revendications 7 à 10, comprenant en outre au moins un deuxième via (289c) disposé de manière à traverser l'élément de support,
dans lequel la première partie est électriquement connectée à la deuxième partie par l'intermédiaire de l'au moins un deuxième via.

12. Dispositif électronique selon la revendication 11, dans lequel l'au moins un deuxième via est disposé de manière à traverser l'élément de support dans la deuxième zone.

13. Dispositif électronique selon l'une quelconque des revendications 1 à 12, comprenant en outre un trou de bossage (269) prévu de manière à traverser l'élément de support à une position adjacente à la première zone ou à la deuxième zone.

14. Dispositif électronique selon l'une quelconque des revendications 1 à 13, comprenant en outre un processeur (1020) ou un module de communication (1090) configuré pour effectuer une communication en champ proche (NFC) à l'aide du motif d'antenne.

15. Dispositif électronique selon l'une quelconque des revendications 1 à 14, dans lequel le motif d'antenne comprend un motif de structuration directe par laser (LDS).
